# EUROPEAN PATENT APPLICATION

(11) **EP 4 575 561 A1**
(43) Date of publication of application: **25.06.2025**
(21) Application number: 23219306.0
(22) Date of filing: 21.12.2023
(51) Int. Cl.: G01S 7/481, G01S 17/89, G01S 17/933, G01S 17/42, G01S 7/497

(54) **SCANNING INSTRUMENT FOR LASER-BASED AIRBORNE SURVEYING COMPRISING A BEAM DEFLECTION ARRANGEMENT WITH A LEAD DEFLECTOR**

(71) Applicant: Hexagon Technology Center GmbH, 9435 Heerbrugg (CH)
(72) Inventor: BESTLER, Simon, D-88085 Langenargen (DE); MASUR, Jan-Michael, D-88131 Lindau (DE); WOHLGENANNT, Rainer, A-6833 Klaus (AT)
(74) Representative: Kaminski Harmann

(57) **Abstract**

The invention relates to a scanning instrument (1) for laser-based airborne surveying comprising a beam deflection arrangement (5) with two wedges (7, 8) and a lead deflector (10). Each of the two wedges (7, 8) is rotatably mounted in a section of a beam path of an outgoing measurement beam (3). The lead deflector (10) is mounted with a fixed spatial relationship with the first (7) of the two wedges and has a cross section smaller than the two wedges (7, 8). The outgoing measurement beam (3) first passes the lead deflector (10) and then the two wedges (7, 8). At most, a small portion of the returning radiation passes through the lead deflector (10), while the greater portion of the returning radiation is deflected by the two wedges (7, 8) without interacting with the lead deflector (10). The lead deflector (10) creates a lead of the outgoing measurement beam (3) in relation to the movement direction of the outgoing measurement beam (3) associated with a spiral scan pattern (4) generated by a rotation of the two wedges (7, 8). Thanks to the created lead and the specific arrangement of the two wedges (7, 8) and the lead deflector (10), a spot figure (25) of the spiral scan pattern (4) drawn on the receiver is compressed while a compact deflection setup for generating different spiral scan patterns is provided.

## Description

The present invention relates to a scanning instrument for airborne laser-based surveying, comprising a beam deflection arrangement for deflecting an outgoing measurement beam and radiation of the outgoing measurement beam returning from a target area.

In airborne laser-based surveying, a measurement beam is directed towards a target surface according to a defined scan pattern using beam deflection parts like movable mirrors or refractive or diffractive optics. By way of example, the measurement beam provides a sequence of laser pulses and the distance between the scanning instrument and observed surface points of the target area are mapped by means of a pulsed time-of-flight method. The measured distances are associated with target angles given by the scan pattern and known positions of the scanning instrument for determining a 3D point cloud of the observed target area.

Often used scan patterns comprise so-called zig-zag patterns, also known as whisk broom pattern or across-track pattern, wherein the measurement beam is swept back and forth from left to right perpendicular to the flight direction of the scanning instrument. For example, this kind of scanning pattern is achieved by using a sweeping mirror.

Other often used scan patterns comprise spiral scan patterns, wherein the measurement beam is moved to draw a spiral scan pattern onto the target area to be observed. For example, in so-called Palmer scanning the spiral scan pattern is generated by the combination of circular scanning of the measurement beam, e.g. provided by a rotating tilted deflection mirror or a rotating refractive wedge, and the forward flight movement of the scanning instrument.

Different scan patterns are chosen depending on required scan requirements. For example, zig-zag scanning may provide a larger field of view in a direction perpendicular to the flight direction than spiral scanning. Therefore, a larger area may be observed in shorter time. On the other hand, in spiral scanning each surface point is scanned from different viewing angles and thus shadow effects (e.g. blockage of the measurement beam by trees or buildings) are minimized.

One problem of such airborne scanning instruments relates to an angle difference occurring between outgoing measurement beam and returning radiation due to the finite round trip time of the emitted measurement beam travelling at the speed of light and the rapidly changing deflection angles provided by the fast steering optics. This problem is also known as the so-called lag angle effect, which causes the receiver to look away from where the measurement beam hits the ground. Due to the rapid movement of the deflection optics, the imaged measurement spot moves on the receiver surface, which requires having a receiver surface larger than the imaged measurement spot. However, such an oversized receiver surface typically causes increased noise, lower speed, and higher cost.

For example, the required field of view of the receiver could be ten to twenty times the size of the measurement beam, which causes strongly increased solar background noise limiting the detection threshold for weak return pulse signals. One option could be to increase the transmission power for achieving a sufficient signal to noise ratio (S/N). However, increasing transmission power is typically limited by eye safety regulations, availability of lasers, and leads to increased costs.

Different measures are known to compensate the lag angle. For example, the angle difference occurring between outgoing and incoming laser pulses is compensated by compensation optics, e.g. an additional tilt mirror or rotating wedge, arranged in the emitter beam path or in the receiver beam path, wherein a tilt or rotation angle of the compensation optics is settable as a function of measurement distance and angular speed of the measurement beam. Another possibility is to use adaptable detector masking, e.g. by a movable blocking component on the receiver surface to provide distance dependent activation of different detection areas on the receiver surface. There are also detectors available, which provide electronic activation of different domains on the receiver surface as a function of measurement distance (and angular scanning speed).

Opto-mechanical lag angle compensation often results in the scanning instrument becoming heavy and bulky. For example, multiple Galvos are implemented in the receiver path, which causes an increase of overall weight and dimensions of the scanning instrument, which may result in the scanning instrument being unusable for smaller airborne carriers because it is too large and heavy.

In addition, when using certain scan patterns large and rapid variation of the angular speed of the measurement beam for different areas of the scan pattern can occur. For example, in an elliptical scan pattern generated by moving the measurement beam to follow an ellipse, the angular speed of the measurement beam in the region of each of the two major vertices on the major axis of the ellipse is higher and varies much faster than in the region of each of the two minor vertices on the minor axis of the ellipse.

A further problem of airborne scanning instruments relates to so-called near-field noise, which arises due to radiation from the outgoing measurement beam returning from nearby obstacles, such as particles or clouds. Such return signals potentially cause false measurements because the time-of-flight calculated with these reflected signals, e.g. pulses, does not represent a distance to the intended target area. Often, the intensity of the light backscattered from the near-field obstacle, e.g. due to fractional backscattering, is similar to the intensity of a signal regularly reflected from the target, which makes differentiating between actual and false measurement signals difficult.

By way of example, the near-field noise problem can be addressed by using a special type of receiver having a central detection area and an outer detection area. In case the receiver has a fixed focus substantially set to infinity, the actual measurement signal returning from the far away target area only impinges on the central detection area, wherein the radiation returning from nearby objects impinge on both the central and the outer detection area.

Often, off the shelf receivers come in a limited range of sizes and dimensions. Finding a receiver with optimized overall dimensions and optimal size of its detection surface, e.g. to ensure that actual measurement signals only impinge on the central detection area and nearfield returns impinge on both the central and the outer detection area, may be difficult or impossible.

It is therefore an object of the present invention to provide a scanning instrument for airborne laser-based surveying which overcomes deficiencies of the prior art, particularly to provide a more compact scanning instrument which can be carried by smaller aerial vehicles such as a helicopter or a drone.

A further object is to provide a scanning instrument for airborne laser-based surveying that provides more efficient scanning when using spiral scan patterns.

A further object is to provide a scanning instrument for airborne laser-based surveying that is less error prone, particularly for near-field noise, while providing a compact overall setup.

These objects are achieved by the realization of at least part of the characterizing features of the independent claims. Features which further develop the invention in an alternative or advantageous manner are described in some of the other features of the independent claims and in the dependent claims.

The invention relates to a scanning instrument configured to be mounted on an airborne carrier and for acquiring point cloud data representing a target area. The scanning instrument comprises a beam deflection arrangement for deflecting an outgoing measurement beam and radiation of the outgoing measurement beam returning from the target area. The beam deflection arrangement comprises two wedges arranged one after the other in the direction of the outgoing measurement beam, which are mounted rotatable about a common axis of rotation. Each of the two wedges has optical characteristics for deflecting incident radiation, wherein the acquiring of the point cloud data comprises emission of the outgoing measurement beam and reception of the radiation of the outgoing measurement beam returning from the target area via the beam deflection arrangement while rotating the two wedges about the axis of rotation.

The wedge of the two wedges that is passed first by the outgoing measurement radiation is referred herein as "upstream" wedge and the other of the two wedges is referred herein as "downstream" wedge. By way of example, the two wedges are each mounted rotatable about a central axis of a section of a beam path of the outgoing measurement beam. The upstream wedge has optical characteristics to provide beam deflection with a first deflection angle and the downstream wedge has optical characteristics to provide beam deflection with a second deflection angle. The first and the second deflection angles can be the same or different. By way of example, the second deflection angle is different from the first deflection angle, e.g. wherein a difference between the first and the second deflection angle falls into an interval of 3° to 15°.

For example, the acquiring of the point cloud data comprises a rotation of the upstream wedge about the axis of rotation at a first rate in a first direction and a rotation of the downstream wedge about the axis of rotation at a second rate in a second direction. This allows the scanning instrument to provide movement of the outgoing measurement beam according to different scan patterns, e.g. by setting equal directions of rotation of the two wedges, and setting opposite directions of rotation of the two wedges.

By way of example, the scanning instrument is configured to provide at least one of a circular scan pattern, an elliptical scan pattern, a flower scan pattern, and a Lissajous scan pattern.

The beam deflection arrangement comprises a lead deflector, which is mounted rotatable about the axis of rotation and has optical characteristics for deflecting incident radiation. For example, the lead deflector is embodied as further wedge. The lead deflector has a maximum extent in a direction perpendicular to the axis of rotation that is less than an extent of each of the two wedges, is arranged so that the outgoing measurement beam passes through it, and is mounted with a fixed spatial relationship to that of the two wedges, upstream wedge, that is passed first by the outgoing measurement beam.

In particular, the lead deflector and the upstream wedge are configured and arranged to each other such that, for rays incident from a direction parallel to the axis of rotation, a projection of a ray deflected by the lead deflector onto a projection plane perpendicular to the axis of rotation intersects a projection of a ray deflected by the upstream wedge onto the projection plane. In other words, the lead deflector and the upstream wedge have a phase offset in their orientations about the axis of rotation, such that the lead deflector deflects the outgoing measurement beam with a different azimuth angle in the projection plane.

In particular, the lead deflector is sized to match a beam diameter or beam size (the cross section) of the outgoing measurement beam but has a cross section smaller than the cross section of the upstream and the downstream wedge. Therefore, at most, a small portion of the returning radiation passes through the lead deflector, while the greater portion of the returning radiation is deflected by the upstream wedge and the downstream wedge without interacting with the lead deflector.

The beam deflection arrangement according to the invention provides for a compact deflection setup for generating different spiral scan patterns, e.g. a circular and an elliptical scan pattern, while the lead deflector is arranged to provide a direction of deflection of the outgoing measurement beam that is different from the direction of deflection of the upstream wedge and - for a nominal measurement distance and a nominal range for the rotation rates of the two wedges - reduces an angle difference occurring between outgoing measurement beam and returning radiation due to the finite round trip time of the outgoing measurement beam (so-called lag angle compensation).

In one embodiment, the two wedges each have an inner area arranged around the axis of rotation, e.g. wherein the axis of rotation is coaxial with the above-mentioned central axis of the section of the beam path of the outgoing measurement beam. Furthermore, the two wedges each have an outer area arranged around the respective inner area, wherein the beam deflection arrangement is configured that the outgoing measurement beam solely passes the inner areas and the radiation of the outgoing measurement beam returning from the target area can pass the outer areas, wherein the lead deflector is dimensioned and arranged to (e.g. fully) cover the inner area of the upstream wedge. For example, the lead deflector is sized and arranged such that it fully covers the inner area but does not cover the outer area of the upstream wedge.

By way of example, the lead deflector is configured to provide beam deflection with a third deflection angle and is arranged to be pierced by the above-mentioned central axis of the section of the beam path of the outgoing measurement beam.

In a further embodiment, the lead deflector is mounted on or in the upstream wedge, e.g. wherein the lead deflector is glued to the upstream wedge.

In a further embodiment, the lead deflector and the upstream wedge are configured and arranged that the outgoing measurement beam is deflected first by the lead deflector and then by the upstream wedge, wherein a projection of the outgoing measurement beam deflected by the lead deflector onto a projection plane perpendicular to the axis of rotation intersects a projection of the outgoing measurement beam deflected by the upstream wedge onto the projection plane at an angle from 70 to 110 degrees.

For example, in such an embodiment, the lead deflector is configured to deflect the incident radiation with a deflection angle that is less than 0.25°.

In a further embodiment, the projection of the outgoing measurement beam deflected by the lead deflector intersects the projection of the outgoing measurement beam deflected by the upstream wedge at an angle of 90 degrees.

In a further embodiment, the upstream wedge has a recess which is arranged in such a way that the outgoing measurement beam is deflected by the lead deflector and passes through the recess without deflection by the upstream wedge. By way of example, the lead deflector is embodied as a further wedge being arranged in the recess of the upstream wedge.

Depending on a selected scan pattern generated by the beam deflection arrangement (generated by setting defined values for rotation rates of the two wedges and by setting defined rotation directions of the two wedges relative to each other) there may still be some remaining measurement spot movement on a receiver surface of a receiver of the scanning instrument. However, the beam deflection arrangement according to the invention provides for a beneficial tradeoff between simplicity of lag angle compensation (which, for example, enables sufficiently small dimensions and weight as well as low opto-mechanical complexity of the scanning instrument) and small remaining spot movement on the receiver surface (which, for example, enables use of a receiver providing sufficiently small signal-to-noise ratio thanks to a sufficiently small ratio between receiver surface dimensions and spot size).

In particular, the beam deflection arrangement according to the invention can be beneficially combined with a so-called near-field noise detector configured to take into account near-field returns (radiation from the outgoing measurement beam returning from nearby obstacles, such as particles or clouds) based on evaluating a central detection area and an outer detection area on the receiver surface. In combination with a fixed focus often substantially set to infinity these types of receivers make use of the fact that an actual measurement signal returning from the farther away target area only impinges on the central detection area, wherein radiation returning from nearby objects impinge on both the central and the outer detection area.

Using elliptical scan patterns typically leads to increased spot movement on the receiver surface because of increased angular speed of the measurement beam in the region of each of the two major vertices on the major axis of the ellipse. The beam deflection arrangement according to the invention essentially intrinsically provides a compression of areas of the spot figure drawn on the receiver in areas associated with the two major vertices on the major axis of the ellipse. Thus, the spot figure drawn on the receiver by returning radiation of the outgoing measurement beam (returning from the target area) can be contained in the central detection area of available near-field noise detectors. At the same time, the beam deflection arrangement allows for tuning the optical layout and available near-field noise detectors such that near-field returns impinge on the central detection area and the outer detection area.

In a further embodiment, the scanning instrument comprises a receiver with a receiving surface having a central detection area and an outer detection area. The receiver is configured to image radiation of the outgoing measurement beam returning from a distance equal or longer than a threshold distance solely onto the central detection area and radiation of the outgoing measurement beam returning from a distance shorter than the threshold distance onto the central detection area and the outer detection area. The receiver is further configured to provide separate detection of radiation impinging on the central detection area and radiation impinging on the outer detection area. This separate detection allows differentiating between a returning distance measurement signal, e.g. a light pulse, provided by the outgoing measurement beam, which is only detected by the central detection area, and a returning distance measurement signal, which is detected by the central detection area and the outer detection area, wherein such differentiating provides for discriminating near-field returns from returns coming from a distance farther than the threshold distance and thus assumed to be associated with the target area.

In a further embodiment, the scanning instrument is configured to provide adaption of a field of view of at least one of the scan patterns by providing different relative adjustments of a rotation of the upstream wedge relative to a rotation of the other of the two wedges.

In a further embodiment, the scanning instrument is configured to provide an elliptical scan pattern having an elliptical shape with respect to a reference axis through the deflection arrangement (by setting opposite directions of rotation of the two wedges), wherein a rotation of a major axis of the elliptical scan pattern about the reference axis is settable by providing different relative adjustments of a rotation of the upstream wedge relative to a rotation of the other of the two wedges.

The scanning instrument according to the different aspects of the invention are described or explained in more detail below, purely by way of example, with reference to working examples shown schematically in the drawing. Identical elements are labelled with the same reference numerals in the figures. Specifically,
- Fig. 1:: a typical airborne surface scan using a scanning instrument according to the invention;
- Fig. 2:: schematically depicts an optical transmission and reception path of a scanning instrument according to an embodiment of the invention;
- Fig. 3:: shows a top view of onto the upstream wedge and the lead deflector fixedly mounted onto the upstream wedge according to an embodiment of the deflection arrangement;
- Fig. 4:: shows a perspective view of the upstream wedge and the lead deflector according to a further embodiment of the deflection arrangement, wherein the lead deflector is arranged in a recess of the upstream wedge;
- Fig. 5:: schematically depicts the principle of a near-field noise detector making use of fixed focus imaging optics, wherein the detector comprises a central detection area and an outer detection area;
- Fig. 6:: schematically depicts a working principle of a receiver surface of an exemplary near-field noise detector based on a fiber optics arrangement;
- Fig. 7:: schematically depicts a course of movement of returning radiation of an elliptical scan pattern on a near-field noise detector as depicted by Fig. 6, wherein the elliptical scan pattern has been generated by a beam deflection arrangement according to the invention.

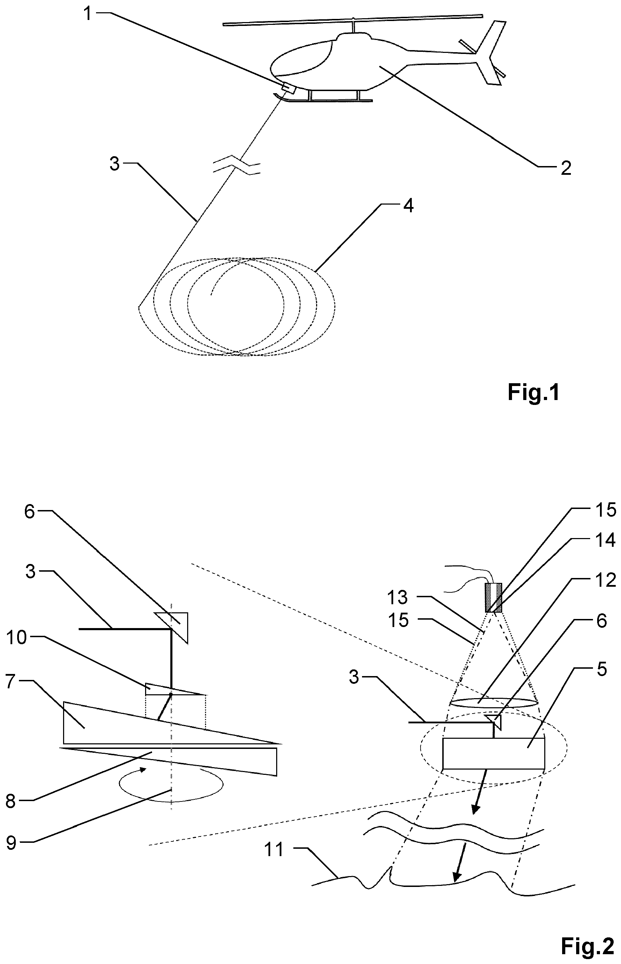

**Figure 1** shows a typical airborne surface scan using a scanning instrument 1 according to the invention on board of an airborne carrier 2, e.g. a helicopter. The scanning instrument 1 is configured to provide distance mapping by an outgoing measurement beam 3 based on the pulsed time-of-flight method. For example, the distance is determined by means of a lidar unit transmitting laser pulses towards the ground and measuring an emission and a return time of the laser pulses, which are used to determine the roundtrip times of the laser pulses. A deflection arrangement is used to direct the outgoing measurement beam 3 providing the laser pulses towards the ground according to a defined spiral scan pattern 4 using two rotatable wedges (not shown here, see Fig. 2)

The spiral scan pattern 4 is generated by the combination of the forward flight movement of the scanning instrument with circular and/or elliptical movement of the measurement beam 3 relative to the scanning instrument 1.

**Figure 2** schematically depicts an optical transmission and reception path of a scanning instrument according to the invention with a zoomed-in portion on the left comprising a beam deflection arrangement 5 according to the invention.

In the embodiment shown, the transmission path and the reception path comprise a coaxial portion, wherein the outgoing measurement beam 3 is coupled into the coaxial portion by a fixed deflection mirror 6. The outgoing measurement beam 3 then passes the beam deflection arrangement 5, which variably deflects the measurement beam 3 to towards the ground 11 according to a defined spiral scan pattern. The beam deflection arrangement 5 comprises a so-called upstream wedge 7 and a so-called downstream wedge 8 being mounted rotatable about a central axis 9 of the coaxial beam path.

For example, the deflection angle provided by the upstream wedge is in the range of 5° to 30° and the deflection angle provided by the downstream wedge is in the range of 5° to 30°.

Different spiral scan patterns can be set by adjusting a rotation of the upstream wedge 7 relative to a rotation of the downstream wedge 8, e.g. by adjusting rotation rates and rotation directions of the two wedges relative to each other. The beam deflection arrangement 5 further comprises a lead deflector 10, here embodied as further wedge, which is mounted with a fixed spatial relationship with the upstream wedge 7. For example, the lead deflector 10 is glued onto the upstream wedge 7.

The lead deflector 10 is arranged to provide a direction of deflection of the outgoing measurement beam 3 such that the additional deflection by the lead deflector 10 creates a lead of the outgoing measurement beam 3 in relation to the movement direction of the outgoing measurement beam 3 associated with the spiral scan pattern. For a nominal measurement distance and a nominal range for rotation settings (rotation rates and rotation directions) of the upstream wedge 7 and the downstream wedge 8 with respect to each other (providing different scan patterns), the lead of the outgoing measurement beam 3 generated by the lead deflector 10 results in a reduction of an angle difference occurring between outgoing measurement beam 3 and returning radiation.

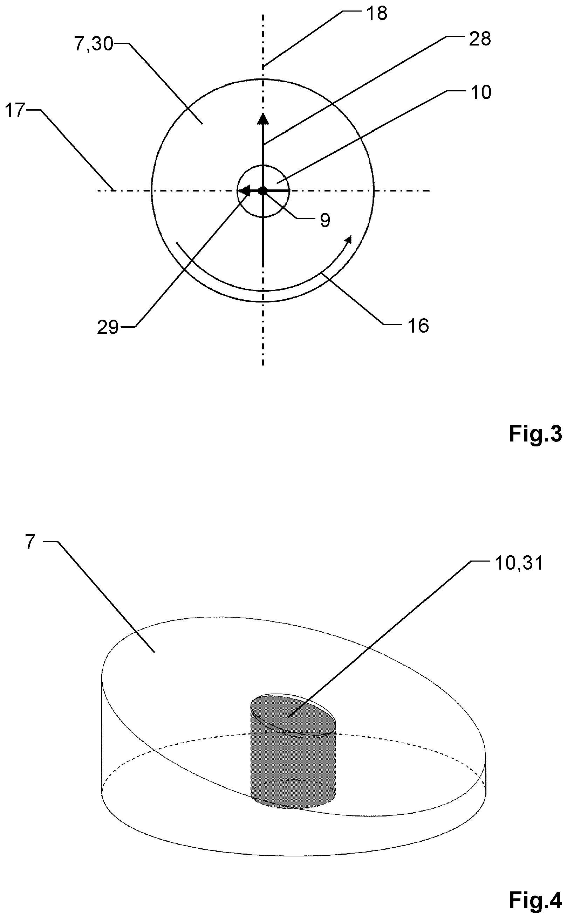

By way of example, as depicted by **Fig. 3** showing a top view onto the upstream wedge 7 and the lead deflector 10 mounted onto the upstream wedge 7 according to an embodiment of the deflection arrangement, the lead deflector 10 deflects rays incident parallel to the central axis 9 (here the axis of rotation of the upstream wedge) with an azimuthal deflection component 28 that is offset by 90° from an azimuthal deflection component 29 provided by the upstream wedge 7. Because the lead deflector 10 is mounted onto the upstream wedge 7, both the upstream wedge 7 and the lead deflector 10 are rotating with the same rotation rate and the same rotation direction 16.

In other words, the lead deflector 10 and the upstream wedge 7 are configured and arranged to each other such that, for rays incident from a direction parallel to the central axis 9, a projection of a ray deflected by the lead deflector 10 onto a projection plane 30 perpendicular to the central axis 9 intersects a projection of a ray deflected by the upstream wedge 7 onto the projection plane 30 at an angle of 90°. Thus, for a ray coaxial with the central axis 9, a deflection plane 17 of the lead deflector 10 and a deflection plane 18 of the upstream wedge 7 intersect at an angle of 90°. The deflection plane 17 of the lead deflector 10 comprises the central axis 9 and a deflection axis indicating a beam direction after deflection of an incident beam coaxial to the central axis 9 by the lead deflector 10. The deflection plane 18 of the upstream wedge 7 comprises the central axis 9 and a beam axis of the beam after being deflected by the upstream wedge 7 but before being deflected by the downstream wedge. Since the deflection angle provided by the lead deflector 10 is typically small, e.g. less than 0.25°, the deflection plane 18 of the upstream wedge 7 is essentially the plane that comprises the central axis 9 and a deflection axis indicating a beam direction after deflection of an incident beam coaxial to the central axis 9 by the upstream wedge 7.

**Figure 4** depicts a perspective view of a further embodiment of the upstream wedge 7 and the lead deflector 10, wherein the lead deflector 10 is arranged in a recess in the center of the upstream wedge 7. Thus, the lead deflector forms a central transmit area 31 of the upstream wedge 7, which has similar deflection properties regarding deflection angle like the rest of the upstream wedge 7, but is slightly rotated about the central axis relative to the rest of the upstream wedge 7. Thus, the central transmit area 31 of the upstream wedge deflects rays incident parallel to the rotation axis of the upstream wedge with an azimuthal deflection component that is slightly rotated compared to the an azimuthal deflection component provided by the rest of the upstream wedge 7. This is also referred to as the central transmit area 31 and the rest of the upstream wedge having a phase offset in the direction of rotation of the upstream wedge.

Referring again to **Fig. 2****,** radiation of the outgoing measurement beam returning from the target area 11 again passes the two wedges 7, 8 and imaging optics 12 such that the radiation 13 is solely imaged onto a central detection area 14 of a so-called near-field noise detector. Due to the fixed focus of the reception path, radiation 15 of the outgoing measurement beam returning from objects closer to a threshold distance is imaged onto the central detection area 14 and an outer detection area 15 of the near-field noise detector.

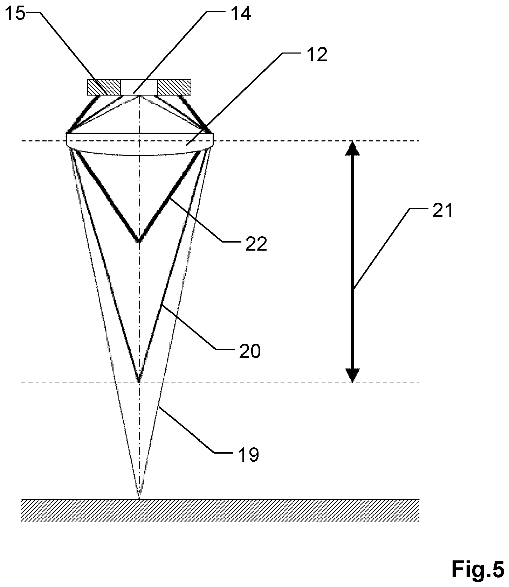

This principle is depicted in further detail by **Fig. 5****,** which schematically shows the focusing effect of fixed-focus imaging optics 12 imaging radiation associated with different measurement distances onto a receiver surface of a near-field noise detector. Radiation returns from three different measurement distances are shown, namely a return 19 from the target area to be measured, a return 20 from an object located at the threshold distance 21, and a return 22 from an object located closer to the threshold distance 21.

The receiver surface comprises a central detection area 14 and an outer detection area 15, wherein radiation 19 returning from a distance further than the threshold distance 21 is solely imaged onto the central detection area 14. When the measurement distance is becoming shorter and approaches the threshold distance 21 the imaged beam spot on the receiver surface gets larger (the beam spot becomes increasingly blurred). For radiation 20 returning from the threshold distance 21 the imaged beam spot fully covers the central detection area 14. When shortening the measurement distance even further, the imaged beam spot becomes larger than the central detection area 14 and thus impinges on the central detection area 14 and the outer detection area 15 of the near-field noise detector.

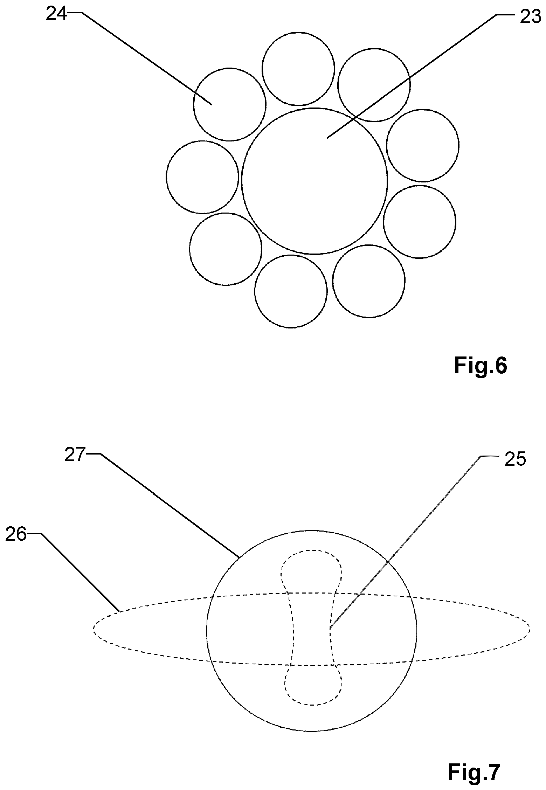

**Figure 6** schematically depicts a working principle of a receiver surface of an exemplary near-field noise detector. Here, the near-field noise detector is based on a fiber optics arrangement for splitting the returning light into a central detection area and an outer detection area, wherein the fiber optics arrangement comprises a central fiber input 23 arranged in the center of the receiver surface and multiple outer fiber inputs 24 symmetrically arranged around the central fiber input 23. The central fiber input 23 and the outer fiber inputs 24 are each configured to collect radiation impinging on the area covered by the respective fiber input and to forward the collected radiation to corresponding detection units. This allows separate detection of radiation impinging on the central detection area given by the central fiber input 23 and radiation impinging on the outer detection area given by the outer fiber inputs 24 in order to use the separate detection to differentiate between radiation returning from a distance further away than the threshold distance and radiation returning from within the threshold distance.

**Figure 7** schematically depicts a course of movement of returning radiation of an elliptical scan pattern on a near-field noise detector as depicted by Fig. 6, wherein the elliptical scan pattern has been generated by a beam deflection arrangement according to the invention.

Thanks to the lead deflector of the beam deflection arrangement, the signal spot trace 25 of radiation returning from the target area (an area further away than the threshold distance, see above) on the receiver is compressed in the regions of the two major vertices on the major axis of the ellipse projected onto the receiver. The dashed line 26 schematically indicates the projected ellipse without presence of a lead deflector. On the other hand, the signal spot trace 27 of near-field returns (returns from a distance closer than the threshold distance, see above) is essentially circular and moves on the transition between the central detection area and the outer detection area.

As a result, radiation associated with the signal spot trace 25 (spot figure drawn on the receiver) on the receiver by returning radiation of the outgoing measurement beam returning from the target area is contained in the central detection area while the near-field returns impinge on the central detection area and the outer detection area.

Thus, the lead deflector and the near-field noise detector are selected in such a way that the center of the imaged light spot of a near-field return on the receiving surface lies on the edge of the central fiber. This ensures that the near-field returns fall half on the central fiber and half on the outer fiber bundle. Thus, no near-field returns are missed and no near-field returns are detected that do not reach the central fiber. In particular, the setup is optimized such that at the lowest flight altitude, the true returns only reach the central fiber. Thus, the center of the image of the true returns remain in the area of the central fiber and the resulting light spot, which is caused by fixed-focus set to infinity, only covers the central fiber but does not reach the outer fiber bundle.

Although the invention is illustrated above, partly with reference to some preferred embodiments, it must be understood that numerous modifications and combinations of different features of the embodiments can be made. All of these modifications lie within the scope of the appended claims.

## Claims

1. Scanning instrument (1) configured to be mounted on an airborne carrier (2) and for acquiring point cloud data representing a target area (11), wherein the scanning instrument (1) comprises a beam deflection arrangement (5) for deflecting an outgoing measurement beam (3) and radiation of the outgoing measurement beam (3) returning from the target area (11), wherein
• the beam deflection arrangement (5) comprises two wedges (7, 8) arranged one after the other in the direction of the outgoing measurement beam (3), which are mounted rotatable about a common axis of rotation (9) and have optical characteristics for deflecting incident radiation, and
• the acquiring of the point cloud data comprises emission of the outgoing measurement beam (3) and reception of the radiation of the outgoing measurement beam (3) returning from the target area (11) via the beam deflection arrangement (5) while rotating the two wedges (7, 8) about the axis of rotation (9),
**characterized in that**
the beam deflection arrangement (5) comprises a lead deflector (10), particularly embodied as further wedge, which is mounted rotatable about the axis of rotation (9) and has optical characteristics for deflecting incident radiation, wherein the lead deflector
• has a maximum extent in a direction perpendicular to the axis of rotation (9) that is less than an extent of each of the two wedges (7, 8),
• is arranged so that the outgoing measurement beam (3) passes through it, and
• is mounted with a fixed spatial relationship to that of the two wedges, upstream wedge (7), that is passed first by the outgoing measurement beam (3).

2. The scanning instrument (1) according to claim 1, wherein the two wedges (7, 8) each have an inner area arranged around the axis of rotation (9) and an outer area arranged around the inner area, wherein the beam deflection arrangement (5) is configured that the outgoing measurement beam (3) solely passes through the inner areas and the radiation of the outgoing measurement beam (3) returning from the target area (11) can pass through the outer areas, wherein the lead deflector (10) is dimensioned and arranged to cover the inner area of the upstream wedge (7), particularly wherein the lead deflector (10) is arranged and dimensioned so that it fully covers the inner area but does not cover the outer area of the upstream wedge (7).

3. The scanning instrument (1) according to any one of the preceding claims, wherein the lead deflector (10) is mounted on or in the upstream wedge (7), particularly wherein the lead deflector (10) is glued to the upstream wedge (7).

4. The scanning instrument (1) according to any one of the preceding claims, wherein the lead deflector (10) and the upstream wedge (7) are configured and arranged to each other such that, for rays incident from a direction parallel to the axis of rotation (9), a projection of a ray deflected by the lead deflector (10) onto a projection plane (30) perpendicular to the axis of rotation (9) intersects a projection of a ray deflected by the upstream wedge (7) onto the projection plane (30).

5. The scanning instrument (1) according to claim 4, wherein the lead deflector (10) and the upstream wedge (7) are configured and arranged that the outgoing measurement beam (3) is deflected first by the lead deflector (10) and then by the upstream wedge (7), wherein a projection of the outgoing measurement beam (3) deflected by the lead deflector (10) onto the projection plane (30) intersects a projection of the outgoing measurement beam (3) deflected by the upstream wedge (7) onto the projection plane (30) at an angle from 70 to 110 degrees.

6. The scanning instrument (1) according to claim 5, wherein the projection of the outgoing measurement beam (3) deflected by the lead deflector (10) intersects the projection of the outgoing measurement beam (3) deflected by the upstream wedge (7) at an angle of 90 degrees.

7. The scanning instrument (1) according to any one of claims 4 to 6, wherein the lead deflector (10) is configured to deflect the incident radiation with a deflection angle that is less than 0.25°.

8. The scanning instrument (1) according to any one of claims 1 to 4, wherein the upstream wedge (7) has a recess which is arranged in such a way that the outgoing measurement beam (3) is deflected by the lead deflector (10) and passes through the recess without deflection by the upstream wedge (7).

9. The scanning instrument (1) according to claim 8, wherein the lead deflector (10) is embodied as a further wedge being arranged in the recess of the upstream wedge (7).

10. The scanning instrument (1) according to any one of the preceding claims, comprising a receiver with a receiving surface having a central detection area (14) and an outer detection area (15), wherein the receiver is configured
• to image radiation (19, 20) of the outgoing measurement beam (3) returning from a distance equal or longer than a threshold distance (21) solely onto the central detection area (14) and radiation (22) of the outgoing measurement beam (3) returning from a distance shorter than the threshold distance (21) onto the central detection area (14) and the outer detection area (15),
• to provide separate detection of radiation impinging on the central detection area (14) and radiation impinging on the outer detection area (15), and
• to use the separate detection to differentiate between a returning distance measurement signal, particularly a light pulse, provided by the outgoing measurement beam (3), which is only detected by the central detection area (14), and a returning distance measurement signal, which is detected by the central detection area (14) and the outer detection area (15).

11. The scanning instrument (1) according to any one of the preceding claims, wherein the two wedges (7, 8) are configured to deflect incident radiation with different deflection angles, in particular wherein a difference between the deflection angles of the two wedges (7, 8) falls into an interval of 3° to 15°.

12. The scanning instrument (1) according to any one of the preceding claims, configured to provide movement of the outgoing measurement beam (3) according to different scan patterns (4) by
• setting equal directions of rotation of the two wedges (7, 8), and
• setting opposite directions of rotation of the two wedges (7, 8).

13. The scanning instrument (1) according to claim 12, configured to provide adaption of a field of view of at least one of the scan patterns by providing different relative adjustments of a rotation of the upstream wedge (7) relative to a rotation of the other of the two wedges (8).

14. The scanning instrument (1) according to claim 12 or 13, configured to provide an elliptical scan pattern having an elliptical shape with respect to a reference axis through the deflection arrangement (5), wherein a rotation of a major axis of the elliptical scan pattern about the reference axis is settable by providing different relative adjustments of a rotation of the upstream wedge (7) relative to a rotation of the other of the two wedges (8).
